# EUROPEAN PATENT SPECIFICATION

(11) **EP 1 288 520 B1**
(45) Date of publication and mention of the grant of the patent: **12.07.2006**
(21) Application number: 02078542.4
(22) Date of filing: 28.08.2002
(51) Int. Cl.: F16D 48/06

(54) **Clutch control apparatus and method**
Kupplungssteuerungsgerät und -Verfahren
Dispositif et procédure de commande d'embrayage

(30) Priority: 28.08.2001 JP 2001257452
(43) Date of publication of application: 05.03.2003
(73) Proprietor: AISIN SEIKI KABUSHIKI KAISHA, Kariya-shi, Aichi-ken (JP)
(72) Inventor: Terakawa, Tomomitsu, Anjo-shi, Aichi-ken (JP); Shimizu, Masaru, Toyota-shi, Aichi-ken (JP); Taguchi, Yoshinori, Anjo-shi, Aichi-ken (JP); Haneda, Yoshitomi, Anjo-shi, Aichi-ken (JP); Miyazaki, Takeshige, Anjo-shi, Aichi-ken (JP); Aoyama, Yoshiyuki, Nishio-ski, Aichi-ken (JP)
(74) Representative: Marshall, John Grahame

(56) References cited:
- EP-A- 0 420 154
- DE-A- 4 134 669
- DE-A- 19 712 871
- FR-A- 2 772 094

## Description

### FIELD OF THE INVENTION

This invention generally relates to a clutch control apparatus for performing a learning control of a stand-by position of a clutch disc arranged facing a flywheel integrally rotated with an output shaft of a driving power source. The stand-by position of the clutch disc represents a starting point for torque transmitted between the flywheel and the clutch disc.

### BACKGROUND OF THE INVENTION

Conventionally, there are vehicles known, which are provided with an automated manual transmission for automatically shifting between gear shift stages following operation of a shift lever. This type of vehicle is provided with a clutch control apparatus for automatically controlling the torque transmitted between a flywheel and a clutch disc. The flywheel is integrally rotated with an output shaft (i.e. a crankshaft) of an internal combustion engine as a driving power source. The clutch disc is arranged facing the flywheel and is integrally rotated with an input shaft of the automated manual transmission.

The above-described clutch control apparatus performs a learning control of a stand-by position of the clutch disc, which is a starting point for torque transmission between the flywheel and the clutch disc. More specifically, the clutch disc is gradually moved towards the flywheel being rotated when three predetermined conditions are satisfied. One of the three predetermined conditions is the condition that the shift lever has been set at a neutral position so as to interrupt the torque transmission via any one of gear sets of the automated manual transmission, the second one is the condition that a rotational number (rotational speed) of the input shaft of the automated manual transmission, i.e. a rotational number of the clutch disc, is approximately equal to zero, and the last one is the condition that the clutch disc has been disengaged from the flywheel so as to interrupt the torque transmission therebetween. The rotation of the input shaft of the automated manual transmission commences at the start of the torque transmission between the flywheel and the clutch disc. At this point, a stand-by position can be detected by returning from an actual position of the clutch disc by a predetermined amount. Accordingly, the learning control of the stand-by position is performed by applying a well-known learning process to the detected position. The aforementioned learning control of the stand-by position of the clutch disc is useful for absorbing any deviation due to wear of the clutch disc and for improving the responsiveness of the torque transmission between the flywheel and the clutch disc.

According to the above-described clutch control apparatus, the learning control of the stand-by position of the clutch disc is generally performed when the internal combustion engine is started. The engine start is allowed when an engine start condition is satisfied in a state where the shift lever has been set at the neutral position. Therefore, an erroneous operation such as an unintended acceleration can be prevented when the engine is started. In other words, the learning control of the stand-by position of the clutch disc is performed through the use of the engine start timing at which the shift lever is required to be set at the neutral position. The learning control is performed on the premise that the shift lever has been set at the neutral position.

However, according to the above-described clutch control apparatus, the clutch disc and the flywheel are generally maintained in an engaged condition when the engine is stopped by turning OFF an ignition switch, e.g. when the vehicle is parked. Before the engine is started the shift lever must be moved to the neutral position in order to move the flywheel and the clutch disc from the engaged condition to a released condition. Therefore, the starting of the engine ought to be delayed from the placing of the shift lever into neutral. Otherwise, the input shaft of the automated manual transmission may be rotated if the engine is started without waiting for the clutch disc to become fully disengaged from the flywheel. As described above, the rotational number of the input shaft of the automated manual transmission is required to be approximately zero for performing the learning control of the stand-by position of the clutch disc. FR-A-2772094 teaches delaying the start of the learning control of the stand-by position of the clutch disc each time the engine is started to allow time for the rotation of the input shaft of the transmission to return to approximately zero. As a result of this, a time period for completing the learning control of the stand-by position of the clutch disc may be extended and a vehicle start may be delayed.

The present invention therefore seeks to provide an improved clutch control apparatus for avoiding a redundant learning control of the stand-by position of the clutch disc, and for avoiding the delays associated with completing the learning control implicit in FR-A-2772094.

### SUMMARY OF THE INVENTION

The present invention provides a clutch control apparatus as defined in claim 1 herein.

According to different aspects of the present invention, The learning control of the stand-by position is enabled at a time of starting the driving power source when at the time of starting the following operating conditions of the transmission are sensed:
(a) the clutch disc has been disengaged from the flywheel; or
(b) a shift lever of the transmission is not set at a neutral condition;
(c) a brake pedal of the vehicle is not depressed; or
(d) a starter motor (11) of the vehicle is not driven.
At other times the learning control is disabled.

### BRIEF DESCRIPTION OF THE DRAWING FIGURES

The foregoing and additional features and characteristics of the present invention will become more apparent from the following detailed description considered with reference to the accompanying drawing figures wherein:
FIG. 1 is a schematic block view illustrating a vehicle control system according to an embodiment of the present invention;
FIG. 2 is a schematic view illustrating an automated manual transmission shown in FIG. 1;
FIG. 3 is a drawing illustrating a shit pattern of a shift lever operating the automated manual transmission shown in FIGs. 1 and 2;
FIG. 4 is a flow chart for explaining a program performed by an electronic control unit shown in FIG. 1; and
FIG. 5 is a flow chart for explaining a program performed by the electronic control unit shown in FIG. 1.

### DETAILED DESCRIPTION OF THE INVENTION

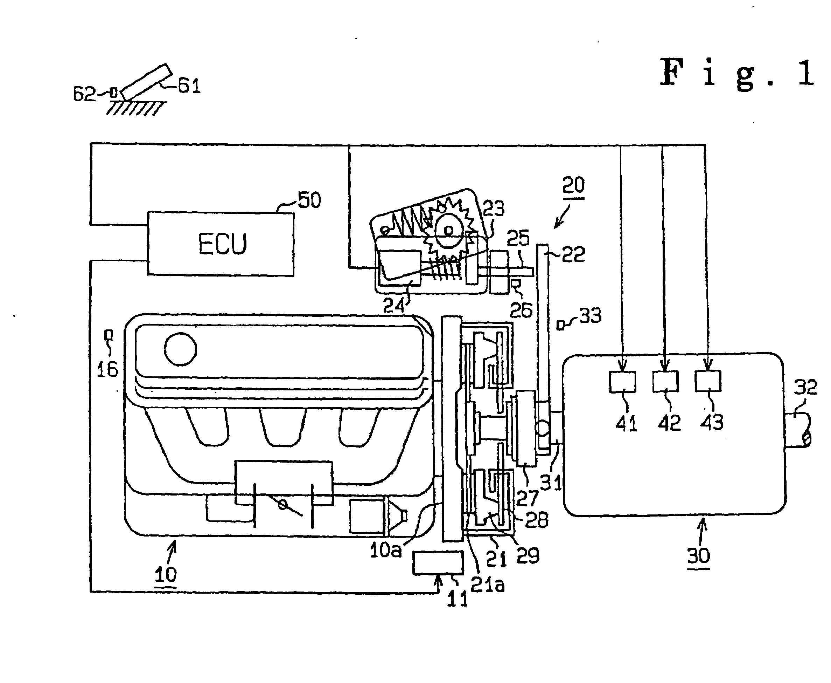

Referring to FIG. 1, a vehicle control system according to a first embodiment of the present invention includes an internal combustion engine 10 (i.e. hereinafter, referred to as an engine) as a driving power source, a flywheel 10a integrally rotated with an output shaft (i.e. a crankshaft of the engine), an automatic clutch assembly 20 assembled to the flywheel 10a, and an automated manual transmission 30. The automated manual transmission 30 is connected to the engine 10 via the automatic clutch assembly 20.

The engine 10 is provided with a starter motor 11 for rotating the flywheel 10a for starting the engine 10 per se. The engine 10 is further provided with an engine rotational number sensor 16 for detecting an engine rotational number Ne.

The automatic clutch assembly 20 is provided with a friction clutch 21 (a mechanical dry type-single disc clutch), a clutch lever 22, and an actuator 23 for the friction clutch21. The actuator 23 controls a torque transmission of the friction clutch 21 by operating the clutch lever 22.

The friction clutch 21 is provided with a clutch disc 21a arranged facing the flywheel 10a and integrally rotated with an input shaft 31 of the automated manual transmission 30. The torque transmission between the flywheel 10a and the clutch disc 21a, i.e. the torque transmission between the output shaft of the engine 10 and the input shaft 31 of the automated manual transmission 30, can be varied by changing the frictional load of the clutch disc 21a that is applied to the flywheel 10a.

The actuator 23 is provided with a direct current motor 24 as a driving power source. The clutch lever 22 is moved in response to the forward or rearward displacement of a rod 25 operated by the motor 24. A release bearing 27 is moved via the clutch lever 22 and a diaphragm spring 28 being elastically in contact with the release bearing 27 is deformed in response to the movement of the release bearing 27. Accordingly, the frictional load of the clutch disc 21a applied to the flywheel 10a can be varied via the pressure plate 29 in response to the movement of clutch lever 22 via the rod 25 and the actuator 23 when the diaphragm spring 28 is deformed. In this way the torque can be transmitted by the friction clutch 21 from the output shaft of the engine to the input shaft 31 of the automated manual transmission 30.

More specifically, when the clutch lever 22 is moved in a direction towards the right-hand side of FIG. 1 in response to the forward movement of the rod 25 in the right-hand side of FIG. 1, the friction load of the clutch disc 21a applied to the flywheel 10a is decreased. On the other hand, when the clutch lever 22 is returned in a direction towards the left-hand side of FIG. 1 in response to the rearward movement of the rod 25, the friction load of the clutch disc 21a applied to the flywheel 10a is increased.
The relationship between the displacement (i.e. the stroke) of the rod 25 and the torque transmission by the friction clutch 21 is described below.
When the rod 25 is moved forward, i.e. in a direction towards the right-hand side of FIG. 1, substantially no friction load is eventually applied to the flywheel 10a by the clutch disc 21a. In this case, the flywheel 10a is disengaged from the clutch disc 21a and no torque is transmitted between the flywheel 10a and the clutch disc 21a. A stand-by position is defined by applying a learning process to the stroke of the rod 25 at this point. The stand-by position corresponds to a stand-by position of the clutch disc 21a which represents a starting point for starting the torque transmission between the flywheel 10a and the clutch disc 21a.

When the rod 25 is moved rearward in a direction towards the left-hand side of FIG. 1 from the stand-by position, the friction load of the clutch disc 21a relative to the flywheel 10a is gradually increased in response to the amount of movement of the rod 25. A difference between the rotational number of the flywheel 10a and the rotational number of the clutch disc 12a (i.e. the slip amount) is generated in response to the friction load of the clutch disc 21a relative to the flywheel 10a. The torque transmission is performed between the flywheel 10a and the clutch disc 21a based upon the slip amount. When the difference between the rotational numbers (i.e. the slip amount) reaches approximately to zero, corresponding to the increase of the friction load by the rearward movement of the rod 25, the flywheel 10a and the clutch disc 21a are rotated in sync. Therefore, the slip amount between the flywheel 10a and the clutch disc 21a can be controlled by controlling the amount of movement of the rod 25 within a range between the stand-by position and a position at which the flywheel 10a and the clutch disc 21 a are rotated in sync.

When the rod 25 is moved further rearward from the position at which the flywheel 10a and the clutch disc 21a are rotated in sync, the friction load of the clutch disc 21a relative to the flywheel 10a is further increased corresponding to the further amount of movement of the rod 25. When the rod 25 is finally separated from the clutch lever 22, the flywheel 10a and the clutch disc 21a are rotated in sync under a condition that a surplus friction load has been applied to the flywheel 10a from the clutch disc 21a. The stroke of the rod 25 under the above-described condition is defined as a full-engagement position. That is, when the rod 25 is maintained at the full-engagement position by the actuator 23 for the automatic clutch 20, the friction clutch 21 is maintained under a full-engagement condition and the synchronized rotation of the flywheel 10a and the clutch disc 21a can be controlled.

As described above, the torque transmitted by the friction clutch 21 can be controlled in response to the stroke of the rod 25 by the actuator 23 for the automatic clutch 20, wherein a vehicle smooth starting performance and a vehicle accurate accelerating performance can be obtained. When the flywheel 10a and the clutch disc 21a has been engaged for performing the torque transmission therebetween in a state where the rod 25 has been located within a range from the stand-by position to the full-engagement position, the friction clutch 21 is defined to be under an engagement condition, i.e. under a clutch engagement condition.

The automatic clutch 20 is equipped with a stroke sensor 26 for detecting the displacement (i.e. the stroke) of the rod 25. The condition of the torque transmitted by the friction clutch 21 is judged based upon a stroke St detected by the stroke sensor 26.

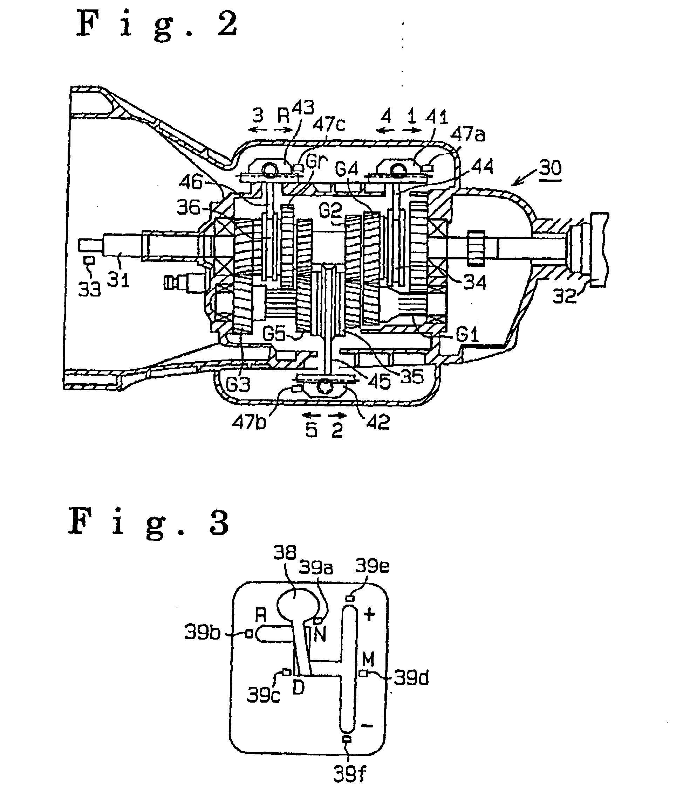

Referring to FIG. 2, the automated manual transmission 30 is a biaxial type gear transmission which is applicable for five forward shift stages and a single rearward shift stage. The transmission 30 is provided with the input shaft 31, an output shaft 32, three pairs of gear sets (G1 and G4, G2 and G5, G3 and Gr), and three sleeves 34, 35, 36. The input shaft 31 of the transmission 30 is connected to the clutch disc 21a of the friction clutch 21 so as to establish a power-transmitting path. The output shaft 32 is connected to an axle shaft (not shown) so as to establish a power-transmitting path. The transmission 30 is equipped with a rotational sensor 33 for detecting a rotational number (rotational speed) of the input shaft 31, i.e. for detecting an input shaft rotational number Ni.

One of the pairs of gear sets, illustrated at the right side of FIG. 2, is a gear set G1 for a first shift stage and a gear set G4 for a fourth shift stage. The gear sets G1 and G4 face each other and the sleeve 34 is disposed therebetween. A second pair of gear sets, illustrated at the middle of FIG. 2, is a gear set G2 for a second shift stage and a gear set G5 for a fifth shift stage. The gear sets G2 and G5 face each other and the sleeve 35 is disposed therebetween. A third pair of gear sets, illustrated at the left side of FIG. 2, is a gear set G3 for a third shift stage and a gear set Gr for a reverse shift stage. The gear sets G3 and Gr face each other and the sleeve 36 is disposed therebetween. Each sleeve 34, 35, 36 forms a synchromesh mechanism with a synchronizer ring and a clutch hub. That is, the automated manual transmission 30 is a synchromesh-type transmission. When the sleeves 34, 35, 36 are moved towards an axial direction of the output shaft 32, a selected shift stage is performed so as to establish a power-transmitting path. On the other hand, when the sleeves 34, 35, 36 are moved towards a neutral position of each pair of gear sets, the power-transmitting path can not be established via any pair of gear sets.

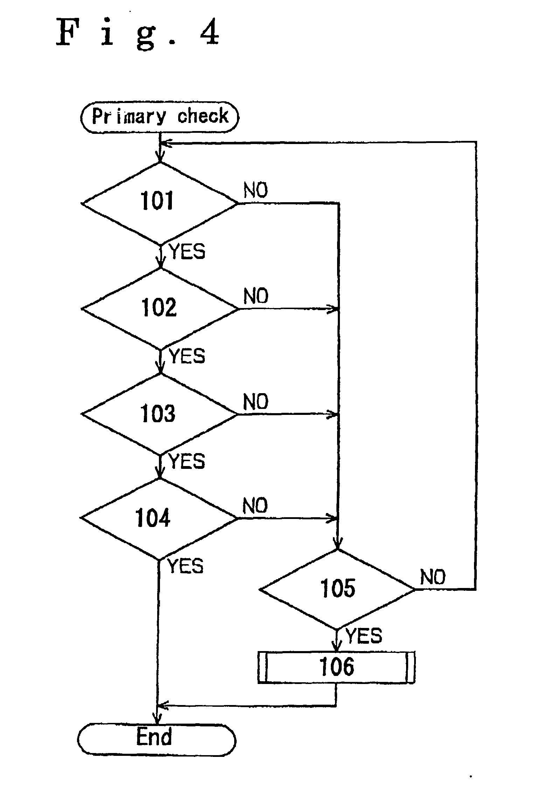

The shift operating mechanism of the automated manual transmission 30 is provided with a shift lever 38 which is operated along a shift pattern shown in FIG. 3. Position sensors 39a, 39b, 39c, 39d, 39e, and 39f are accommodated at the shift positions of the shift lever 38 for detecting the shift position of the shift lever 38, respectively. The position sensor 39a detects the shift operation of the shift lever 38 to a N position, i.e. a neutral position in which the driving power can not be transmitted via any gear set. The position sensor 39b detects the shift operation of the shift lever 38 to an R position, i.e. a reverse position for establishing the power-transmitting path via the gear set Gr. The position sensor 39c detects the shift operation of the shift lever 38 to a D position, i.e. a drive position for establishing the power-transmitting path via any one of the gear sets G1, G2, G3, G4, and G5 under an automatic shift mode. The position sensor 39d detects the shift operation of the shift lever 38 to a M position, i.e. a manual position for establishing the power-transmitting path via any one of the gear sets G1, G2, G3, G4 and G5 under a manual shift mode. The position sensor 39e detects the shift operation of the shift lever 38 to a positive (+) position, i.e. an upper shift position for establishing the power-transmitting path via an upper shift-up gear set. The position sensor 39f detects the shift operation of the shift lever 38 to a negative (-) position, i.e. a lower shift position for establishing the power-transmitting path via a shift-down gear set. A shift stage of the automated manual transmission 30 can be switched based upon the shift position detected by the above position sensors.

As illustrated in FIG. 2, the automated manual transmission 30 is still further provided with actuators 41, 42, 43 for the shift operation. The actuator 41 for the shift operation moves the sleeve 34 via a shift fork 44. The actuator 42 for the shift operation moves the sleeve 35 via a shift fork 45. The actuator 43 for the shift operation moves the sleeve 36 via a shift fork 46. The automated manual transmission 30 is further equipped with position sensors 47a, 47b, 47c for detecting the position of each sleeve 34, 35, 36. The condition of the power transmitting via each gear set is judged based upon the position detected by the sensors 47a, 47b, 47c.

As illustrated in FIG. 1, a brake pedal 61 (i.e. a brake operating member) depressed by the vehicle driver is equipped with a brake sensor 62 for detecting an operation of the brake pedal 61. The vehicle control system according to the first embodiment of the present invention further includes an electronic control unit 50 (ECU). The ECU 50 is provided with a well-known microcomputer (CPU, not shown) as a main unit, a read only memory (ROM, not shown) for memorizing various programs and maps, a random access memory (RAM, not shown) for temporarily memorizing various data, and an electrically erasable programmable read only memory (EEPROM, not shown) for storing the data without a backup power source. The ECU 50 is connected to various sensors including the engine rotational number sensor 16, the stroke sensor 26, the rotational number sensor 33, the position sensors 39a, 39b, 39c, 39d, 39e, 39f, 47a, 47b, 47c, the brake sensor 62, and the starter motor 11, the actuator 23 for the automatic clutch 20, and the actuators 41, 42, 43 for the shift operation. The ECU 50 reads the signals detected by the various sensors so as to detect the vehicle driving conditions such as a driving condition of the starter motor 11, the engine rotational number, the torque transmitting condition by the friction clutch 21, the input shaft rotational number, the shift position, and the brake operation. The ECU 50 further activates the starter motor 11, the actuator 23 for the automatic clutch 20, and the actuators 41, 42, and 43 based upon the vehicle driving conditions.

More particularly, the ECU 50 rotates the flywheel 10a by driving the starter motor 11 and judges the driving condition of the starter motor 11 by detecting a voltage applied to the starter motor 11.

The ECU 50 controls the torque transmitted by the friction clutch 21 by activating the actuator 23 for the automatic clutch 20. Therefore, the torque transmission by the friction clutch 21 can be automatically controlled corresponding to the vehicle driving conditions. The ECU 50 further switches the shift stage for establishing the power-transmitting path by activating the actuators 41, 42, 43 for the shift operation. Therefore, the shift stage of the automated manual transmission 30 can be automatically controlled corresponding to the vehicle driving conditions.

Next, a process for performing a primary check associated with the clutch control according to the first embodiment of the present invention is described hereinbelow with reference to FIG. 4. An object of the primary check is to perform a learning control of the stand-by position of the rod 25, i.e. to perform a learning control of the stand-by position of the clutch disc 21a. The learning control is performed when the ignition switch is turned ON fromOFF.

When the process for performing the primary check is started, the ECU 50 first judges at step **101** whether or not the friction clutch 21 has been under the clutch engagement condition. More specifically, the ECU 50 reads out the stroke St detected by the stroke sensor 26 and judges whether or not the detected stroke St is located within the range from the stand-by position to the full-engagement position. When the ECU 50 judges that the friction clutch 21 has been under the clutch engagement condition, the program proceeds to step **102** for judging whether or not the shift lever 38 has been set at the neutral position. More specifically, the ECU 50 judges whether or not the shift lever 38 has been set at the neutral position based upon the result detected by the position sensor 39a. When the ECU 50 judges that that the shift lever 38 has been set at the neutral position, the program proceeds to step **103** for judging whether or not the brake pedal 61 has been depressed. More particularly, the ECU 50 judges whether or not the brake pedal 61 has been depressed based upon the result detected by the brake sensor 62. When the ECU 50 judges that the brake pedal 61 has been depressed, the program further proceeds to step **104** for judging whether or not the starter motor 11 has been driven. More specifically, the ECU 50 judges whether or not the starter motor 11 has been driven by detecting the voltage applied to the starter motor 11.

When the ECU judges that the starter motor 11 has been driven, the program is terminated. According to the first embodiment of the present invention, the engine 10 is started when the shift lever 38 has been set at the neutral position at step **102**, the brake pedal 61 has been depressed at step **103**, and the starter motor 11 has been driven at step **104**. In this case, the primary check for learning the stand-by position of the rod 25 is omitted when the above-described three engine start conditions are satisfied in a state where the friction clutch 21 has been under the clutch engagement condition.

On the other hand, when the friction clutch 21 has not been under the clutch engagement condition or when at least one of the engine start conditions has not been satisfied, the program proceeds to step **105** for judging whether or not the engine 10 has been started. More specifically, the ECU 50 judges whether or not then engine rotational number Ne is greater than a predetermined rotational number for judging whether or not the engine 10 has been started. Further, the engine 10 is started by an unillustrated process on the premise that the engine start conditions have been satisfied.

When the ECU 50 judges at step **105** that the engine 10 has not been started, the program returns to step **101**. The process at step **105** is repeatedly performed until the engine 10 is started when a negative answer (NO) is obtained at any one of steps **101** through **104**. Further, when the engine start conditions are satisfied in a state where the friction clutch 21 has been under the clutch engagement condition, the primary check for learning the stand-by position of the rod 25 is omitted and the program is terminated in the same manner as described above.

When the ECU 50 judges at step **105** that the engine 10 has been started, the program proceeds to step **106** for executing a subroutine of the primary check. At step **106**, the learning control is performed for learning the stand-by position of the rod 25, i.e. for learning the stand-by position of the clutch disc 21a. That is, the ECU 50 moves the rod 25 in the rearward direction by driving the actuator 23 for the automatic clutch 20 on the condition that the rotational number of the input shaft 31 (i.e. the input shaft rotational number Ni), i.e. the rotational number the clutch disc 21a is approximately equal to zero based upon the result detected by the rotational number sensor 33. Further, the clutch disc 21a is gradually moved towards the rotated flywheel 10a, under the condition that the clutch disc 21a has been disengaged from the flywheel 10a so as to interrupt the torque transmission, along the rearward movement of the rod 25. The rotation of the input shaft 31 of the automated manual transmission 30 commences along the start of the torque transmission between the flywheel 10a and the clutch disc 21a. At this point, a position is detected by returning from an actual position of the rod 25 by a predetermined amount. Accordingly, the learning control of the stand-by position is performed by applying a well-known learning process to the detected position. For instance, a learning correcting position is calculated as the stand-by position by striking an average value based upon a detected position (a stand-by position) of the rod 25 at this time and each detected position (each stand-by position) of the rod 25 at each predetermined previous time. The stand-by position is memorized by the EEPROM and the program is then terminated. The stand-by position (the learning correcting position) memorized by the EEPROM is stored without a backup power source. Therefore, the stand-by position can be available when the engine 10 is started next time.

Accordingly, the deviance due to the wear of the clutch disc 21a can be absorbed by performing the learning control of the stand-by position of the rod 25, i.e. the stand-by position of the clutch disc 21 a, wherein the responsibility of the torque transmission between the flywheel 10a and the clutch disc 21a can be effectively improved.

As described above, the clutch control apparatus according to the first embodiment of the present invention can produce some effects described hereinbelow.

When the engine start conditions are satisfied in the state where the flywheel 10a and the clutch disc 21a are under the engaged condition so as to perform the torque transmission therebetween, the learning control of the stand-by position of the rod 25, i.e. the stand-by position of the clutch disc 21 a can be omitted when the engine 10 is started. Therefore, when the input shaft 31 (i.e. the clutch disc 21 a) is rotated along the start of the engine 10, there is no need to wait for a time when the rotational number of the input shaft 31 becomes approximately zero for learning the stand-by position. As a result of this, a redundant learning control of the stand-by position of the clutch disc 21a can be effectively avoided. The vehicle start delay can be hence restrained.

Next, the clutch control apparatus according to a second embodiment of the present invention is described below. The identical components as the first embodiment are described with the identical reference numerals and the descriptions thereof are omitted for simplifying the description.

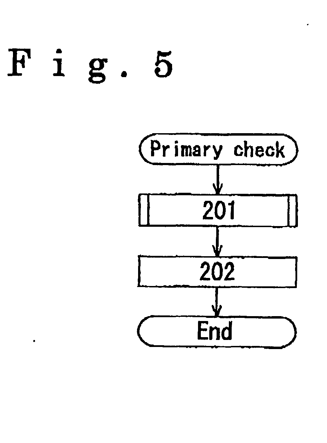

Referring to FIG. 5, a main object of the primary check according to the second embodiment is to perform the learning control of the stand-by position of the rod 25, i.e. the stand-by position of the clutch disc 21a. The learning control is performed when the ignition switch is turned off from the on-stage in the state where the shift lever 28 has been set at the neutral position. That is, the learning control according to the second embodiment is performed on the condition that the engine 10 is stationary.

When the process for performing the primary check is started, the ECU 50 performs at step **201** the subroutine of the primary check in proportion as the first embodiment. At step **201**, the ECU 50 performs the learning control of the stand-by position of the rod 25, i.e. the stand-by position of the clutch disc 21a. That is, the ECU 50 moves the rod 25 in the rearward direction by driving the actuator 23 for the automatic clutch 20 on the condition that the rotational number of the input shaft 31 (i.e. the input shaft rotational number Ni), i.e. the rotational number of the clutch disc 21a is approximately equal to zero based upon the result detected by the rotational number sensor 33. Further, the clutch disc 21 a is gradually moved towards the rotated flywheel 10a, under the condition that the clutch disc 21a has been disengaged from the flywheel 10a so as to interrupt the torque transmission, along the rearward movement of the rod 25. In this case, the flywheel 10a has been idly rotated after the stop of the engine 10. The rotation of the input shaft 31 of the automated manual transmission 30 commences along the start of the torque transmission between the flywheel 10a and the clutch disc 21a. At this point, the position is detected by returning from the actual position of the rod 25 by the predetermined amount. Accordingly, the learning control of the stand-by position is performed by applying the well-known learning process to the detected position in the same manner as the first embodiment. The program then proceeds to step **202**.

At step 202, the ECU 50 further moves the friction clutch 21 so as to establish the full-engagement condition. That is, the ECU 50 moves the rod 25 to the full-engagement position by driving the actuator 23 and establishes the full-engagement condition of the friction clutch 21. The program is then terminated. According to the second embodiment, the deviance due to the wear of the clutch disc 21a can be absorbed and the responsibility of the torque transmission between the flywheel 10a and the clutch disc 21a can be improved in the same manner as the first embodiment in the present invention.

As described above, the clutch control apparatus according to the second embodiment of the present invention can produce some effects described hereinbelow.

According to the second embodiment, the learning control of the stand-by position is performed when the engine 10 has been stationary with the shift lever 38 set at the neutral position. Generally, when the shift lever 38 has been set at the neutral position, the engine start conditions can be satisfied for a substantially short period of time upon starting the engine 10. For example, as described according to the first embodiment, when the engine start conditions are satisfied in the state where the clutch disc 21a has been engaged with the flywheel 10a so as to perform the torque transmission therebetween, the learning control of the stand-by position isdisabled. In this case, the learning control of the stand-by position performed when the engine 10 is stationary can be employed as a supplement.

The present invention is not limited to the above-described embodiments and can be modified as described below.

According to a first alternative embodiment, the start of the engine 10 is judged based upon the engine rotational number Ne as illustrated at step **105** in FIG. 4. Alternatively, the start of the engine 10 can be judged based upon an elapsed time since the engine start conditions have been satisfied.

According to a second embodiment, the engine 10 is considered as having stopped when the ignition switch is turned OFF from the ON condition. Alternatively, the engine 10 can be stopped when the engine rotational number Ne becomes smaller than a predetermined rotational number. For instance, the predetermined rotational number can be set at a smaller rotational number than an idle rotational number. In this case, the same effect as the second embodiment can be produced.

According to the first and second embodiments in the present invention, the rod 25 is mechanically operated associated with the operation of the clutch disc 21a. Therefore, the learning control of the stand-by position of the rod 25 is performed in substitution for a learning control of the stand-by position of the clutch disc 21 a. Alternatively, the stand-by position of the clutch disc 21a can be obtained by performing a learning control of either a rotational angle of a rotational shaft of the direct current motor 24 of the actuator 23 for the automatic clutch 20 or an electric power amount supplied by the direct current motor 24, or by performing a learning control of a displacement of any one of the clutch lever 22, the release bearing 27, the diaphragm spring 28, the pressure plate 29, and the clutch disc 21a.

According to the first and second embodiments of the present invention, the engine 10 is employed as the driving power source. However, an electric motor can be employed as the driving power source.

## Claims

1. A clutch control apparatus for a motor vehicle, comprising:
a flywheel (10a) integrally rotated with an output shaft of a driving power source (10);
a clutch disc (21a) arranged facing the flywheel (10a) and connected to a transmission (30); and
a learning control for determining a stand-by position of the clutch disc (21a), wherein the stand-by position is a starting point of a torque transmission between the flywheel (10a) and the clutch disc (21 a);
**characterized in that** the learning control for determining the stand-by position is sometimes enabled and activated at a time of starting the driving power source (10) in response to sensed operating conditions of the transmission, and is at other times disabled at a time of starting the driving power source;
wherein the learning control is enabled at the time of starting the driving power source when the driving power source start operation does not immediately follow a state in which the clutch disc (21 a) has been engaged with the flywheel (10a) so as to establish a torque transmission path between the flywheel (10a) and the clutch disc (21a).

2. A clutch control apparatus according to claim 1, wherein the learning control is enabled at a time of starting the driving power source from a stationary condition when at the time of starting the driving power source a shift lever (38) of the transmission (30) is not set at a neutral position.

3. A clutch control apparatus according to claim 1 or claim 2, wherein the learning control is enabled at a time of starting the driving power source from a stationary condition when at the time of starting the driving power source a brake pedal (61) of the vehicle is not depressed.

4. A clutch control apparatus according to any preceding claim, wherein the learning control is enabled at a time of starting the driving power source from a stationary condition when at the time of starting the driving power source a starter motor (11) of the vehicle is not driven.

5. A clutch control apparatus according to any preceding claim, wherein the learning control comprises means for progressively bringing the clutch disc (23a) and the flywheel (10a) into their engagement positions until rotation of an input shaft (31) of the transmission (30) is detected.

## Patentansprüche

1. Kupplungssteuerungsvorrichtung für ein Kraftfahrzeug, enthaltend:
ein Schwungrad (10a), das integral mit einer Ausgangswelle einer Antriebsleistungsquelle (10) gedreht wird;
eine Kupplungsscheibe (21 a), die auf das Schwungrad (10a) gerichtet angeordnet ist und mit einem Getriebe (30) verbunden ist; und
eine lernende Steuerung zum Bestimmen einer Stand-by-Position der Kupplungsscheibe (21 a), wobei die Stand-by-Position ein Anfangspunkt einer Drehmomentübertragung zwischen dem Schwungrad (10a) und der Kupplungsscheibe (21 a) ist;
**dadurch gekennzeichnet, dass** die lernende Steuerung zum Bestimmen der Stand-by-Position manchmal zum Zeitpunkt des Startens der Antriebsleistungsquelle (10) in Betrieb gesetzt und aktiviert wird als Antwort auf erfasste Betriebsbedingungen des Getriebes, und zu anderen Zeiten zu einem Zeitpunkt des Startens der Antriebsleistungsquelle außer Betrieb gesetzt wird;
wobei die lernende Steuerung zum Zeitpunkt des Startens der Antriebsleistungsquelle in Betrieb gesetzt wird, wenn der Vorgang des Startens der Antriebsleistungsquelle nicht unmittelbar einem Zustand folgt, in dem die Kupplungsscheibe (21a) mit dem Schwungrad (10a) in Eingriff gebracht wurde, so dass ein Drehmomentübertragungsweg zwischen dem Schwungrad (10a) und der Kupplungsscheibe (21a) hergestellt ist.

2. Kupplungssteuerungsvorrichtung nach Anspruch 1, wobei die lernende Steuerung zum Zeitpunkt des Startens der Antriebsleistungsquelle aus einem stationären Zustand in Betrieb gesetzt wird, wenn zum Zeitpunkt des Startens der Antriebsleistungsquelle ein Schalthebel (38) des Getriebes (30) nicht in eine neutrale Position gesetzt ist.

3. Kupplungssteuerungsvorrichtung nach Anspruch 1 oder 2, wobei die lernende Steuerung zum Zeitpunkt des Startens der Antriebsleistungsquelle aus einem stationären Zustand in Betrieb gesetzt wird, wenn zum Zeitpunkt des Startens der Antriebsleistungsquelle ein Bremspedal (61) des Fahrzeuges nicht niedergedrückt ist.

4. Kupplungssteuerungsvorrichtung nach einem der vorhergehenden Ansprüche, wobei die lernende Steuerung zum Zeitpunkt des Startens der Antriebsleistungsquelle aus einem stationären Zustand in Betrieb gesetzt wird, wenn zum Zeitpunkt des Startens der Antriebsleistungsquelle ein Anlassermotor (11) des Fahrzeuges nicht betrieben wird.

5. Kupplungssteuerungsvorrichtung nach einem der vorhergehenden Ansprüche, wobei die lernende Steuerung Mittel zum progressiven Stellen der Kupplungsscheibe (23a) und des Schwungrads (10a) in ihre Eingriffspositionen aufweist, bis die Rotation einer Eingangswelle (31) des Getriebes (30) erfasst wird.

## Revendications

1. Dispositif de commande d'embrayage pour un véhicule à moteur, comprenant :
un volant (10a) qui tourne intégralement avec un arbre de sortie d'une source d'énergie motrice (10) ; et
une commande autodidacte pour la détermination d'une position d'attente du disque d'embrayage (21a), dans lequel la position d'attente est un point de départ d'une transmission de couple entre le volant (10a) et le disque d'embrayage (21a) ;
**caractérisé en ce que** la commande autodidacte pour la détermination de la position d'attente est quelquefois mise en fonctionnement et activée à un moment de démarrage de la source de puissance motrice (10) en réponse à des conditions de fonctionnement captées de la transmission, et à d'autres moments désactivée à un moment de démarrage de la source d'énergie motrice ;
dans lequel la commande autodidacte est activée au moment de démarrage de la source d'énergie motrice lorsque le fonctionnement de démarrage de la source d'énergie motrice ne suit pas immédiatement un état dans lequel le disque d'embrayage (21a) a été engagé avec le volant (10a) de façon à établir un chemin de transmission de couple entre le volant (10a) et le disque d'embrayage (21a).

2. Dispositif de commande d'embrayage selon la revendication 1, dans lequel la commande autodidacte est mise en fonctionnement à un moment de démarrage de la source d'énergie motrice depuis une condition stationnaire lorsqu'au moment du démarrage de la source d'énergie motrice un levier sélecteur de vitesse (38) de la transmission (30) n'est pas réglé à une position neutre.

3. Dispositif de commande d'embrayage selon la revendication 1 ou la revendication 2, dans lequel la commande autodidacte est mise en fonctionnement à un moment de démarrage de la source d'énergie motrice depuis une condition stationnaire lorsqu'au moment du démarrage de la source d'énergie motrice une pédale de frein (61) du véhicule n'est pas appuyée.

4. Dispositif de commande d'embrayage selon l'une quelconque des revendications précédentes, dans lequel la commande autodidacte est mise en fonctionnement à un moment de démarrage de la source d'énergie motrice depuis une condition stationnaire lorsqu'au moment du démarrage de la source d'énergie motrice un démarreur (11) du véhicule n'est pas entraîné.

5. Dispositif de commande d'embrayage selon l'une quelconque des revendications précédentes, dans lequel la commande autodidacte comprend un moyen pour amener progressivement le disque d'embrayage (23a) et le volant (10a) dans leurs positions d'engagement jusqu'à ce que la rotation d'un arbre d'entrée (31) de la transmission (30) soit détectée.
